# EUROPEAN PATENT APPLICATION

(11) **EP 2 114 029 A1**
(43) Date of publication of application: **04.11.2009**
(21) Application number: 08008101.1
(22) Date of filing: 28.04.2008
(51) Int. Cl.: H04L 1/00

(54) **Method of and device for transmission of data in a communication network**

(71) Applicant: Nokia Siemens Networks Oy, 02610 Espoo (FI)
(72) Inventor: Haustein, Thomas, Dr., 81735 München (DE); Kim, Jee Hyun, 81371 München (DE); Zirwas, Wolfgang, 81249 München (DE)
(74) Representative: Bruglachner, Thomas E.

(57) **Abstract**

A method of transmitting data in a communication network is provided, wherein the method comprises transmitting a data packet comprising a first plurality of pilot data and a second plurality of payload data a first time, receiving an indication signal indicating whether the data packet is decodable on the receiving side, and, in case that the indication signal indicates that it is determined that the data packet is not decodable, initiating a retransmission of the data packet comprising a third plurality of pilot signals, wherein some of the pilot signals of the third plurality of pilot signals are formed by converted payload data of the second plurality of payload data.

## Description

### Field of invention

The present invention relates to the field of methods of transmitting data in a communication network, in particular in a mobile communication network like a Long Term Evolution (LTE) communication network. Furthermore, the invention relates to a device for transmission data in a communication network, in particular, to a network element, like a mobile phone, PDA or a base station. Moreover, the invention relates to a program element, and a computer-readable medium.

### Art Background

In today's Multiple Input Multiple Output (MIMO) systems like that specified 3GPP eUTRA Long Term Evolution (LTE) require significant overhead for channel estimation, i.e. a significant number of pilot or reference signals have to be inserted into downlink as well as uplink transmission to make accurate channel estimation feasible. For more advanced antenna schemes, which might become relevant in the future like, e.g. different types of cooperative transmission, or non linear precoding schemes the requirements for accurate channel estimation might increase even further. Accurate channel estimation is required for the receiver processing, i.e. the demodulation and decoding as well as for frequency selective scheduling, determination of the optimum MIMO scheme, etc.

For Orthogonal Frequency Division Multiplexing (OFDMA) systems like LTE a common approach is to insert a pilot grid with certain spacing in time, i.e. into specific symbols- and frequency- i.e. onto specific subcarriers of the OFDMA symbols. The required number of pilot or reference signals however depends on the coherence time as well as coherence bandwidth. Typically the number of reference signals will be selected for the worst case radio channels as otherwise the worst case radio channels cannot be decoded properly or otherwise an adaptation of the reference signal structure to the actual radio conditions is required.

This adaptation is not well accepted as it generates additional overhead, may not allow for regular frame structures and thus makes things more complicated, may generate significant failures in case of a wrong detection of the control signals specifying the actual reference structure and requires a good estimation of the optimum reference structure for a specific situation.

The basic reference signal design for 2 and 4 antenna elements can be found in 3GPP TS 36.211, from which it can be derived that the overhead for 2 antenna elements (AE) is about 10% and for 4 AEs it is about 15%.

Thus, there may be a need for a method of and a device for transmitting data in a communication network which provides an improved performance.

### Summary of the Invention

This need may be met by a method of transmitting data in a communication network, a device for transmission data in a communication network, a communication network system, and a computer-readable medium, a program element, and a computer-readable medium according to the independent claims. Advantageous embodiments of the present invention are described by the dependent claims.

According to an exemplary aspect a method of transmitting data in a communication network, in particular in a MIMO communication network, is provided, wherein the method comprises transmitting a data packet comprising a first plurality of pilot data and a second plurality of payload data a first time, receiving an indication signal indicating whether the data packet is decodable on the receiving side, and, in case that the indication signal indicates that it is determined that the data packet is not decodable, initiating a retransmission of the data packet comprising a third plurality of pilot signals, wherein some of the pilot signals of the third plurality of pilot signals are formed by converted payload data of the second plurality of payload data.

In particular, the third plurality of pilot data may correspond to a higher number than the second plurality of pilot data. The pilot data may form so-called pilot signals. In particular, a so-called No-Acknowledge (NACK) message of a HARQ protocol may be sent in case the original payload data are not decodable. The communication network may be a mobile communication network, e.g. so-called Multiple Input Multiple Output (MIMO) system.

Additionally to the above described method of transmitting a method of receiving and/or decoding a transmitted data packet may be provided, wherein the method comprises the receiving of a data packet comprising a first plurality of pilot data and a second plurality of payload data a first time, determining whether the data packet is decodable on the receiving side and in case that it is determined that the data packet is not decodable sending an indication signal to a sending side initiating a retransmission of the data packet comprising a third plurality of pilot signals, wherein some of the pilot signals of the third plurality of pilot signals are formed by converted payload data of the second plurality of payload data. In particular, the retransmitted data may be decoded. The converted payload data may also be called additional pilot data or additional payload signals.

According to an exemplary aspect of the invention a sending device for transmitting data in a communication network, in particular in a MIMO communication network, is provided, wherein the sending device comprises a transmitting unit adapted to transmit a data packet comprising a first plurality of pilot data and a second plurality of payload data a first time, and a receiving unit adapted to receive an indication signal indicating whether the data packet is decodable on the receiving side. Furthermore, the transmitting unit is adapted to retransmit the data packet in case that the indication signal indicates that it is determined that the data packet is not decodable, and wherein the retransmitted data packet comprises a third plurality of pilot signals, wherein some of the pilot signals of the third plurality of pilot signals are formed by converted payload data of the second plurality of payload data.

In particular, the sending device may further comprise a plurality of antenna elements adapted to perform an orthogonal frequency division multiplexing. Furthermore, one or several of the plurality of antenna elements may be switchable. For example, it may be possible to switch off in advance, i.e. before the original data transmission, data transmission on one or more antenna elements for intended future additional pilot data. That is, according to specific embodiments of the invention one or more predetermined subcarriers may be switched off, e.g. for a MIMO channel estimation. Thus, it may be possible to improve Channel State Information (CSI).

According to an exemplary aspect of the invention a communication network, in particular a MIMO communication network, is provided which comprises a sending device according to an exemplary aspect of the invention, and a receiving device, wherein the receiving device is adapted to receive a data packet comprising the first plurality of pilot data and the second plurality of payload data a first time, to determine whether the data packet is decodable on the receiving side, and, in case that it is determined that the data packet is not decodable, to send an indication signal to the sending device initiating a retransmission of the data packet comprising a third plurality of pilot signals, wherein some of the pilot signals of the third plurality of pilot signals are formed by converted payload data of the second plurality of payload data.

In particular, the device may be a user equipment, like a mobile phone, terminal, PDA or laptop, while the receiving device may be a base station, a relay node, for example.

According to an exemplary aspect of the invention a program element is provided, which, when being executed by a processor, is adapted to control or carry out a method of transmitting data according to an exemplary aspect of the invention.

According to an exemplary aspect of the invention a computer-readable medium, in which a computer program is stored which, when being executed by a processor, is adapted to control or carry out a method of transmitting data according to an exemplary aspect of the invention.

The terms "data packet" may particularly denote a known data packet, i.e. a packet of data in a communication network based on transmission of data packets. However, the term may also denote every data sequence which can be transmitted via a communication network, e.g. a data block. In particular, a data packet may comprise a sequence of data blocks or data signals.

The term "converted data" may particularly denote that data are used in another way than it is originally intended. For example, "normal" or payload data may be used as pilot data or reference data in a retransmission. Thus, the respective converted data may be used or handled as payload data and/or as pilot data on the receiving side. That is, the term may primarily denote that the handling of the respective data is changed, while the term may not necessarily mean that the data itself is changed or converted. However, it is possible that the data are changed or that at least the respective data are transmitted having a higher power level and/or a higher redundancy in the retransmission step.

By using a method according to an exemplary aspect of the invention it may be possible to adapt the pilot grid to time varying channel conditions which would need to know the required number of reference or pilot signals in advance, when using a known method of transmitting data. However, since, according to an exemplary aspect of the invention, former payload data are converted to pilot data or pilot signals in a required retransmission, it may be possible to optimize the number of used pilot signals in the retransmission, wherein the optimization may lead to the fact that always the optimum number of pilot signals for a certain radio condition is used. Thus, it may be possible to minimize the pilot overhead without sacrificing the transmission performance. In particular, it may not be necessary to base adaptation schemes on previous channel estimations, which might be outdated and which might lead to a complex system design.

Furthermore, it may be possible that only the necessary redundancy is transmitted in the retransmission in case the original transmission or former transmission failed, or at least a better estimation of the necessary redundancy may be possible, when using a method according to an exemplary aspect of the invention. This may not be possible when using a common transmission method, since pilot data has to be inserted into the data stream in advance together with the first transmission. In case additional pilot or reference signals are sent in a retransmission the channel condition will have changed typically so that the additional reference signals are useless for improving the channel estimation of the first transmission, when using a common transmission method.

Moreover, it may be possible that the method according to an exemplary aspect of the invention may be less complex than known adaptation schemes which adapt the transmissions to the communication conditions like frequency selectivity of the radio channel. Furthermore, the probability of a possible mismatch between the transmission side and the receiving side may be decreased when using a method according to an exemplary aspect of the invention. In particular, the proposed method may also work well for tracking the radio channel even in the case of relatively low Signal-to-Noise ratios compared to known methods. Additionally, it may be possible to optimize or reduce the impact of the trade off of performance loss for worst case scenarios against an acceptable overhead.

A gist of an exemplary aspect of the invention may be seen in providing a retransmission scheme wherein in an original transmission of data, e.g. a data packet, a first number of pilot signals is transmitted. In case it is determined that the data packet could not be decoded on the receiving side the data block is retransmitted using additional pilot signals which are formed by payload data of the original transmission. Thus, some payload data of the original transmission are converted into pilot signals. A particular difference between conventional schemes and the method according to an exemplary aspect of the invention may be that for conventional schemes the number of reference or pilot signals of a pilot grid is adapted before transmission, while in the inventive scheme or method in the first transmission only a sparse pilot grid is used, which may be made denser in case of a retransmission by using payload data for pilot data or reference signals in the retransmission.

A method according to an exemplary aspect of the invention may provide for the fact that the pilot or reference signal overhead can be minimized and additionally full performance for channel estimation may be possible. Similar to conventional HARQ also for reference signals it may be possible to provide an optimum adaptation of the overhead. In particular, the overhead for additional or converted pilot data or pilot signals may be limited to those resources (time and frequency) were data are being transmitted. Moreover, it may be possible to implement more advanced schemes like cooperative transmission by converting payload data or payload signals into reference signals in case this is required in a given scenario, in particular when an already standardized system, e.g. LTE) is used.

Next, further exemplary embodiments of the method of transmitting data are described. However, these embodiments also apply to the device for transmitting data, the communication network, the program element, and the computer-readable medium.

According to another exemplary embodiment of the method the first plurality of pilot data are inserted into the data packet as a pilot grid having a first density.

In particular, the pilot grid may form a homogeneous grid, e.g. the pilot data or pilot signals may be equidistantly arranged in the grid.

According to another exemplary embodiment of the method the third plurality of pilot data are inserted into the data packet as a pilot grid having a second density, wherein the third density is higher than the second density.

According to another exemplary embodiment of the method the converted payload data are retransmitted with increased transmission power and/or higher redundancy.

By retransmitting the converted payload data, i.e. the payload data of the second plurality of payload data of the original transmission which are intended to be used as additional pilot data in the retransmission, with an increased power level and/or a higher redundancy than in the original transmission it may be possible to ensure that the converted payload data or additional pilot data are correctly received on the receiving side, so that the channel may be correctly estimated leading to the fact that the payload data may be decodable on the receiving side.

According to another exemplary embodiment of the method the transmission power of the converted payload data is increased by summing up adjacent payload data signals of the data packet.

By summing up several adjacent payload data signals or data blocks of the data packet it may be possible to combine these payload data signals to a single virtual pilot or reference signal with accordingly higher transmission power.

According to another exemplary embodiment the method further comprises predetermining the some of the payload data which are intended to be sent as pilot data in the retransmission before the data packet is transmitted the first time. In particular, QAM4 modulation schemes may be used for transmitting of the predetermined payload data intended to be sent as pilot data in the retransmission.

By predetermining specific payload data as possible candidates for converted payload data, i.e. additional pilot data, for a retransmission it may be possible to use specific modulation schemes, e.g. QAM4 modulation schemes, for the respective payload data intended as possible future reference or pilot signals already at the original or first transmission, which may ensure that the respective future reference signals are transmitted with increased or maximum power, possibly leading to the effect that the channel estimation may be eased or ensured.

According to another exemplary embodiment the method further comprises sending control information relating to the converted payload data in the retransmission.

In particular, control information may be sent in the retransmission step, wherein the control information may identify the selected payload data which are converted to pilot data in the retransmission. That is, the control information may identify data bins of the data packet which are selected by the transmitting side for forming the converted pilot signals or reference signals due to their high transmission power at the first transmission, for example.

According to another exemplary embodiment of the method the converted payload data are determined based on a predetermined criterion.

In particular, the predetermined criterion may be an expected cross correlation value between data signals, e.g. between the pilot data, between the pilot data and payload data and/or between the payload data. Furthermore, the cross correlation value may be used to estimate channels or subcarriers relating to different antennas, e.g. in a MIMO communication network. For example, the payload data of a data sequence or data packet may be used for the converted or additional pilot data or symbols providing the lowest cross correlation. A possible choosing may be done by checking all possible cross correlation values, especially also for different sequence lengths, for example. E.g. if a specific symbol or data position one antenna sends with a very low power constellation point and the other one with a very high constellation point this point may provide already a very low cross correlation.

In particular, Alamouti processing may be used to insert extra diversity and/or different combinations of superposed signals. For example, in a second transmission, e.g. on a second subcarrier or by using a second antenna element, Alamouti space time mapping may be used in the retransmission. The Alamouti processing may have an influence on the cross correlation values. The Alamouti processing may in particular be useful in the case of multiple streams and a retransmission with the same modulation and coding scheme (MCS) level choice. When using Alamouti processing it may be advantageous to perform a specific handling of an HARQ header in an HARQ transmission, e.g. an implicit numbering may be used in case of a synchronized HARQ.

According to another exemplary embodiment the method further comprises determining on a receiving side whether the retransmitted data packet is decodable, in case it is determined that the retransmitted data packet is not decodable initiating a further retransmission of the data packet comprising a fourth plurality of pilot signals, wherein some of the pilot signals of the fourth plurality of pilot signals are formed by converted further payload data of the second plurality of payload data.

That is, it may be possible to perform a second retransmission in case the increased number of pilot data or pilot signals in the first retransmission is still not high enough to securely decode the data packet. In this case it may be possible to further increase the number of converted or additional payload data, i.e. payload data which are used as pilot data.

According to another exemplary embodiment of the method the converted payload data are encoded using an LDPC code.

The use of LDPC codes (Low-Density Parity-Check codes) may be advantageous, since these codes may perform well for short block lengths and the number of additional pilot data or converted pilot data, which may also be called pseudo reference signals (RS), may be relatively small so that a relatively short block length may arise for the retransmission.

Summarizing an exemplary aspect of the invention may be seen in the fact that in a first data transmission only a sparse pilot grid is send while in a retransmission a denser pilot grid including additional pilot data or pilot signals is send by converting some of the payload data of the first transmission into pilot data. That is, already transmitted data signals may be used as data as well as for the purpose of pilot signals. To accomplish this yet not decoded data which are intended as additional pilot signals may be retransmitted for a HARQ retransmission (after reception of a NACK message) with higher power and/or with higher redundancy, especially compared to "normal" data signals, i.e. to the payload data which are not converted to pilot signals. This may be seen as a special form of unequal error protection taking care of the double purpose of these data signals, i.e. channel estimation as well as for CSI estimation.

The aspects and exemplary embodiments defined above and further aspects of the invention are apparent from the example of embodiment to be described hereinafter and are explained with reference to these examples of embodiment.

### Brief Description of the Drawings

Fig. 1 schematically shows overhead per antenna for different radio channels.
Fig. 2 schematically illustrates a pilot grid of a method according to an exemplary embodiment of the invention.
Fig. 3 schematically shows an overall system design according to an exemplary embodiment of the invention.
Fig. 4 schematically shows a flowchart of a method according to an exemplary embodiment of the invention.

### Detailed Description

The illustration in the drawings is schematic. It is noted that in different figures, similar or identical elements are provided with the similar or identical reference signs.

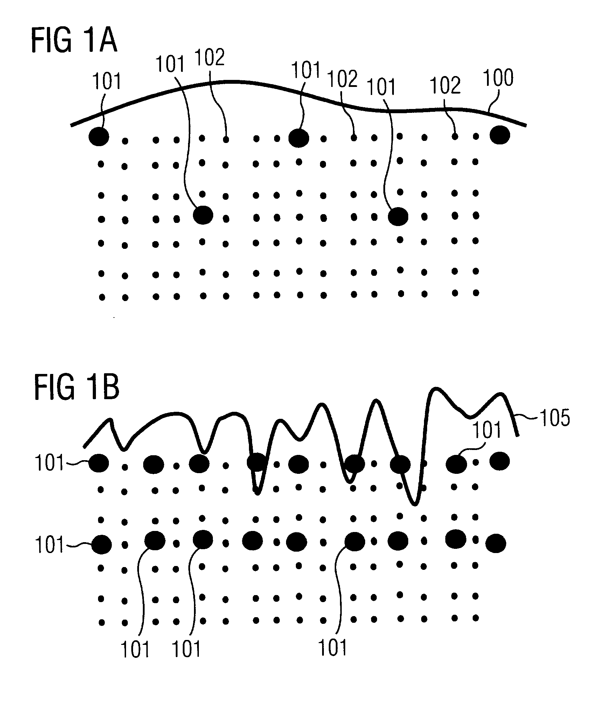

With reference to Fig. 1 overhead per antenna for different radio channels when using a conventional transmission method will be described. Fig. 1A and Fig. 1B schematically show a data grid in which pilot data or pilot signals are implemented. The pilot signals are labeled 101 in Fig. 1A and Fig. 1B and are indicated by the greater dots, while normal or payload data are labeled 102 and are indicated by the smaller dots. In particular, Fig. 1A shows the usual required overhead for a relatively flat radio channel 100 while Fig. 1B shows the same for a very frequency selective radio channel 105. As can be seen for the flat channel an overhead of about 3.5% might be enough while the frequency selective channel might require for this example about 16% overhead. This overhead per antenna might increase even further in case of more antenna elements on the transmitting side Tx.

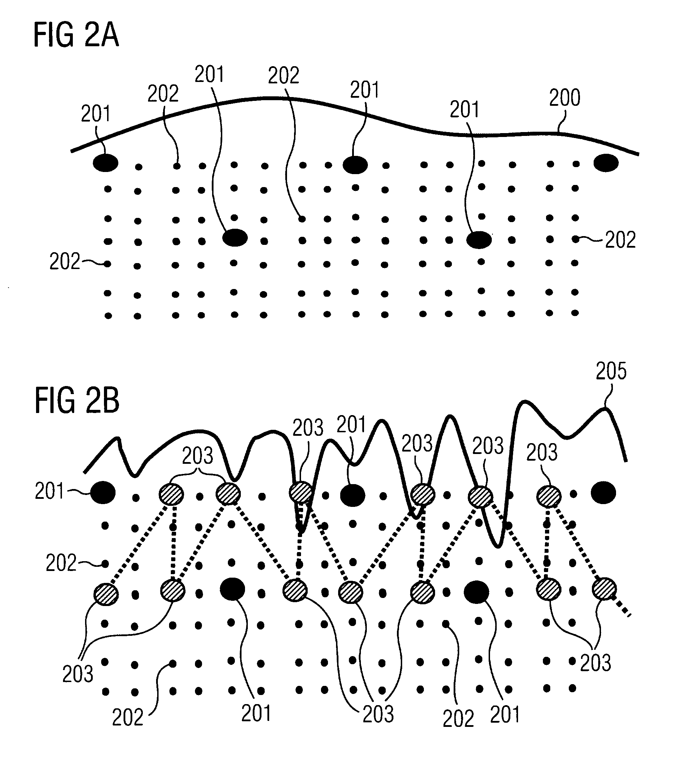

With reference to Fig. 2 overhead per antenna for different radio channels when using a transmission method according to an exemplary embodiment of the invention will be described. Fig. 2A and Fig. 2B schematically show a data grid in which pilot data or pilot signals are implemented. Similar in Fig. 1 the pilot signals are labeled 201 in Fig. 2A and Fig. 2B representing a relative flat radio channel 200 and a very frequency selective radio channel 205, respectively, while normal or payload data are labeled 202 and are indicated by the smaller dots. However, in difference to Fig. 1 there is a different kind of data type, namely payload data which are intended to be handled as pilot signals or reference signals in a retransmission. These additional reference signals are indicated by the hatched dots 203 which are connected by the dashed line 204. The additional reference signals are transmitted already in the first transmission with a higher redundancy so that they can be used as pseudo reference signals in a potential retransmission.

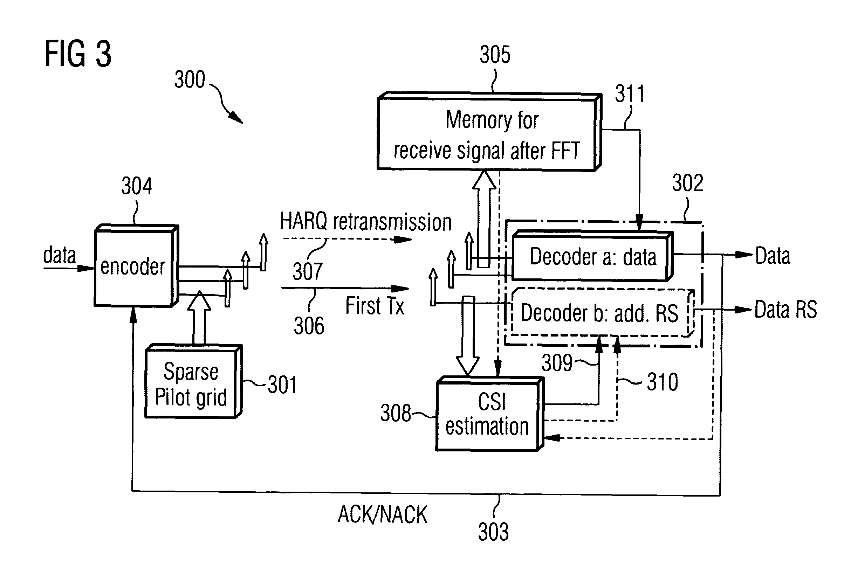

Fig. 3 schematically shows an overall system design according to an exemplary embodiment of the invention. In the system 300 first a sparse pilot grid 301 is being sent 306 and in case of a successful decoding at the receiver or decoder 302 an ACK message 303 is fed back to the transmitter or encoder 304. In case that the Cyclic Redundancy Check (CRC) fails, the receiver 302 checks whether this is fully or partly due to a bad channel estimation and sends back a NACK message together with the request for a denser pilot grid, so that a retransmission 307 may be initiated.

For the decoding firstly the data of the transmission are stored in a memory 305 after a Fast Fourier Transformation (FFT) and then the pilot signals are used for an estimation of a Channel State Information (CSI) 308. The estimated channel state is then used in the decoding which is indicated by the arrows 309 and 310. In the case of an ACK message, i.e. the case that the first transmission could be decoded, only the sparse pilot grid is used indicated by the arrow 311 leading from the memory 305 to the decoder 302, while in the case of the retransmission the pilots of the original sparse pilot grid and the pseudo pilot signals are used in the CSU estimation and thus for the decoding. It should be noted that in Fig. 3 the dashed arrows relate to the data flow in case of a retransmission.

The denser pilot grid is achieved by sending additional redundancy for predefined data bins. These have been defined so that they are useful for improved channel estimation. This allows the receiver to decode the data bins intended as "pseudo reference signals" (RS) with high accuracy so that they can be used for an improved channel estimation, which in turn will increase the decoding probability of the rest of the data bins significantly. For the "normal data", i.e. the payload data not intended for improvement of the channel estimation, the additional amount of redundancy will be small or zero to minimize the overhead. Only in case that even with the improved channel estimation decoding fails for these data more redundancy will be send.

So the strong redundancy for the pseudo RS's makes out of the firstly unknown data bins known data, which is basically the main feature of pilots, i.e. that they are known transmit signals.

The second feature of pilot signals, i.e. high power allowing for high accuracy for the CSI estimation may not always be given for random data signals. Therefore, different enhancing techniques are given in the following to maximize the virtual power of the reference signals:
- A first option is just to sum up the power of several adjacent data signals and to combine them into a single "virtual" reference signal with accordingly higher power.
- Another approach would be to send only QAM4 modulation schemes at those data bins intended as possible future reference signals already at the first transmission so that full RS power is guaranteed.
- A further option would be to send control information to what data bins have been selected by the TX side as RSs due to their high transmission power at the first transmission. However, here the higher control overhead may have to be considered.

As the number of additional pseudo RSs might be relatively small there will be relative short block lengths for the retransmissions. For this reason it will be beneficial to use LDPC codes for the pseudo RSs as LDPCs may perform very well for short block lengths.

For systems using more than one antenna element further considerations may be considered, but the scheme may be applicable in principle. The main issue is that, if both or all antenna elements transmit data simultaneously it is may be difficult to separate the pilot signals for each antenna element.

To achieve some form of orthogonallity it may be possible to use several succeeding data signals (or data signals on adjacent subcarriers) as spreading sequences. In general and for multi-stream MIMO transmission the data signals on different antennas will be random and different so that the data sequences of the different antenna elements may exhibit low cross correlation. This can be used to identify different antenna elements at the receiver and to estimate the according radio channels.

As at the receiver the data sequences for both data streams will be known after HARQ retransmission of the pseudo RS signals the performance may be improved by selecting those data symbols of the sequence providing the lowest cross correlation. This could be done e.g. by checking all possible cross correlation values, especially also for different sequence lengths. For example if at a specific symbol position one antenna sends with a very low power constellation point and the other one with a very high constellation point this point will provide already a very low cross correlation.

If average residual cross correlation between data signals is still too high one might switch off in advance data transmission on one or more antenna elements for the intended future pseudo RSs. This improves CSI estimation quality but reduces the data throughput.

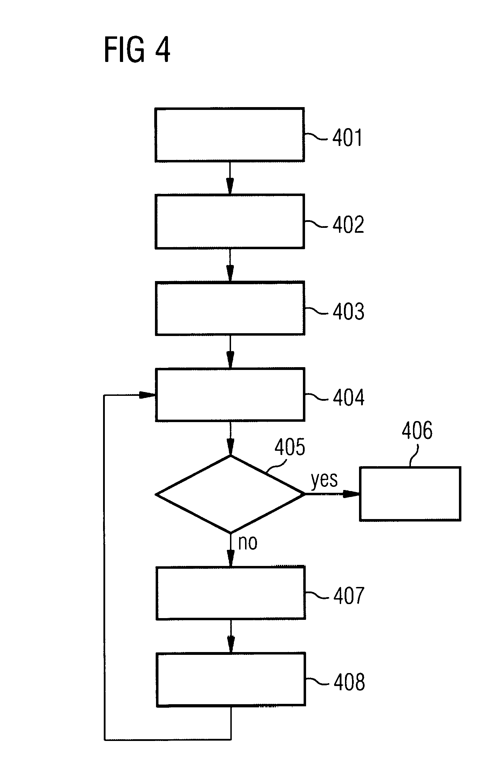

Fig. 4 shows a schematically flowchart of a method 400 according to an exemplary embodiment. In a first step 401 data signals of a data packet are determined which are intended to represent pseudo pilot signals and additionally redundancy is added to the respective data signals or data bins. Then the encoded data packet is transmitted 402 comprising a sparse pilot grid, normal data signals and the pseudo pilot signals. Then the encoded data packet is received at the receiving side 403, a channel estimation is performed 404 and decision is made 405 whether the decoding can be performed or not. In case a decoding can be performed the data are decoded and output 406 and an ACK message is send back to the transmitting side. In case the decoding cannot be performed an NACK message is send back to the transmitting side 407 and a retransmission is performed 408 in which the pseudo pilot signals are used as pilot signals. Then again a channel estimation for the retransmitted data is performed on the receiving side using the original pilot signals as well as the pseudo pilot signals. In case the channel estimation is now sufficient

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

### List of reference signs:

- 100: Flat radio channel
- 101: Pilot signals
- 102: Payload data or payload signals
- 105: Very frequency selective radio channel
- 200: Flat radio channel
- 201: Pilot signals
- 202: Payload data or payload signals
- 203: Pseudo pilot signals
- 205: Very frequency selective radio channel
- 300: Communication system
- 301: Sparse pilot grid
- 302: Receiver/Decoder
- 303: ACK/NACK signal
- 304: Transmitter/Encoder
- 305: Memory
- 306: First transmission
- 307: Retransmission
- 308: CSI estimation
- 309: Estimated channel (retransmission)
- 310: Estimated channel (retransmission)
- 311: Estimated channel (first transmission)
- 400: Flowchart of a method
- 401: Determining pseudo pilots
- 402: Transmitting of the data packet
- 403: Receiving data packet
- 404: Performing channel estimation
- 405: Deciding whether decoding is possible
- 406: Decoding
- 407: Sending NACK message
- 408: Retransmission

## Claims

1. A method (400) of transmitting data in a communication network, the method comprising:
transmitting a data packet (402) comprising a first plurality of pilot data and a second plurality of payload data a first time;
receiving an indication signal (407) indicating whether the data packet is decodable on the receiving side;
in case that the indication signal indicates that it is determined that the data packet is not decodable initiating a retransmission of the data packet (408) comprising a third plurality of pilot signals, wherein some of the pilot signals of the third plurality of pilot signals are formed by converted payload data of the second plurality of payload data.

2. The method (400) according to claim 1,
wherein the first plurality of pilot data are inserted into the data packet as a pilot grid having a first density.

3. The method (400) according to claim 2,
wherein the third plurality of pilot data are inserted into the data packet as a pilot grid having a second density, and
wherein the third density is higher than the second density.

4. The method (400) according to claim 1,
wherein the converted payload data are retransmitted with increased transmission power and/or higher redundancy.

5. The method (400) according to claim 4,
wherein the transmission power of the converted payload data is increased by summing up adjacent payload data signals of the data packet.

6. The method (400) according to claim 1, further comprising:
predetermining (401) the some of the payload data which are intended to be sent as pilot data in the retransmission before the data packet is transmitted the first time.

7. The method (400) according to claim 1, further comprising:
sending control information relating to the converted payload data in the retransmission.

8. The method (400) according to claim 1,
wherein the converted payload data are determined based on a predetermined criterion.

9. The method (400) according to claim 1, further comprising:
determining on a receiving side (405) whether the retransmitted data packet is decodable;
in case it is determined that the retransmitted data packet is not decodable initiating a further retransmission (407) of the data packet comprising a fourth plurality of pilot signals, wherein some of the pilot signals of the fourth plurality of pilot signals are formed by converted further payload data of the second plurality of payload data.

10. The method (400) according to claim 1,
wherein the converted payload data are encoded using an LDPC code.

11. Sending device for transmitting data in a communication network, the device comprising:
a transmitting unit adapted to transmit a data packet comprising a first plurality of pilot data and a second plurality of payload data a first time;
a receiving unit adapted to receive an indication signal indicating whether the data packet is decodable on the receiving side;
wherein the transmitting unit is adapted to retransmit the data packet in case that the indication signal indicates that it is determined that the data packet is not decodable,
wherein the retransmitted data packet comprises a third plurality of pilot signals, wherein some of the pilot signals of the third plurality of pilot signals are formed by converted payload data of the second plurality of payload data.

12. The sending device according to claim 11, further comprising:
a plurality of antenna elements adapted to perform an orthogonal frequency division multiplexing.

13. A communication network comprising:
a sending device according to claim 11, and
a receiving device,
wherein the receiving device is adapted to receive a data packet comprising the first plurality of pilot data and the second plurality of payload data a first time, to determine whether the data packet is decodable on the receiving side, and, in case that it is determined that the data packet is not decodable, to send an indication signal to sending device initiating a retransmission of the data packet comprising a third plurality of pilot signals, wherein some of the pilot signals of the third plurality of pilot signals are formed by converted payload data of the second plurality of payload data.

14. A program element, which, when being executed by a processor, is adapted to control or carry out a method of managing a performing of processing tasks according claim 1.

15. A computer-readable medium, in which a computer program is stored which, when being executed by a processor, is adapted to control or carry out a method of managing a performing of processing tasks according claim 1.
